# EUROPÄISCHE PATENTANMELDUNG

(11) **EP 3 895 520 A1**
(43) Veröffentlichungstag der Anmeldung: **20.10.2021**
(21) Anmeldenummer: 21160760.1
(22) Anmeldetag: 04.03.2021
(51) Int. Cl.: A01F 25/18

(54) **VERFAHREN, STEUEREINRICHTUNG UND VERDICHTUNGSFAHRZEUG ZUR VERDICHTUNG VON ERNTEGUT IN EINEM SILO**

(30) Priorität: 15.04.2020 DE 102020110297
(71) Anmelder: Deere & Company, Moline, IL 61265 (US)
(72) Erfinder: Fritz, Norbert, 68163 Mannheim (DE); Brocke, Stefan, 68163 Mannheim (DE)
(74) Vertreter: Holst, Sönke

(57) **Zusammenfassung**

Ein Verfahren zur Verdichtung von Silage (16) sieht eine ortsabhängige Anpassung der Verdichtungswirkung eines Verdichtungsfahrzeugs (28) entlang eines Verdichtungswegs (30) durch eine elektronische Steuereinrichtung (46) vor.

## Beschreibung

Die Erfindung betrifft ein Verfahren zur Verdichtung von Erntegut in einem Silo, sowie eine elektronische Steuereinheit zur Kontrolle eines Verdichtungsfahrzeugs und ein damit ausgestattetes Verdichtungsfahrzeug.

### Stand der Technik

Silage ist eine Art von Futter, das aus grünblättrigen Pflanzen hergestellt wird, welche in einem Silo eingelagert und durch eine Versäuerung stabilisiert werden. Die Versäuerung erfolgt mittels einer Gärung. Die fertige Silage kann an Kühe, Schafe und andere Wiederkäuer verfüttert werden. Der Einlager- und Gärprozess wird als Silierung bezeichnet und erfolgt unter Verwendung kompletter Graspflanzen (nicht nur der Fruchtstände), wie Mais, Sorghum oder anderer Cerealien.

In einigen Ländern (z.B. Nordamerika, Australien, Nordwesteuropa und Neuseeland) ist es üblich, die Silage in großen Halden auf dem Boden abzulegen und mit einem Ackerschlepper zu überfahren, um die Luft herauszudrücken, und sie dann mit Plastikplanen abzudecken, die durch abgefahrene Reifen oder Reifenringwände fixiert werden. In anderen Ländern (z.B. Nordeuropa) werden zum Abladen der Silage so genannte Silobunker verwendet, die einen Boden und seitliche Wände aus Beton oder anderen Materialien (z.B. Eisenbahnschwellen) umfassen. Auch hier erfolgen eine Verdichtung und eine Abdichtung mit einer Plane, die durch Reifen fixiert wird.

In der Vergangenheit wurde die Gärung durch indigene Mikroorganismen durchgeführt; heutzutage hingegen wird die Silage mit Siliermitteln beaufschlagt, in welchen spezielle Mikroorganismen enthalten sind, um die Gärung zu beschleunigen oder die Silage zu verbessern. Siliermittel können eine oder mehrere Stämme von Milchsäurebakterien enthalten, üblicherweise Lactobacillus plantarum. Andere verwendete Bakterien umfassen die Sorten Lactobacillus buchneri, Enterococcus faecium und Pediococcus.

Die im Silo eingelagerte und abgedeckte Silage wird demnach einer anaeroben Gärung unterzogen, die etwa 48 Stunden nach der Befüllung des Silos beginnt, und in den Pflanzen enthaltenen Zucker in Säure umwandelt. Die Gärung ist nach etwa 2 Wochen im Wesentlichen beendet. Bevor die anaerobe Gärung beginnt, gibt es eine aerobe Phase, in welcher der in der Silage enthaltene Sauerstoff verbraucht wird. Die Packungsdichte des Futters bestimmt die Qualität der erhaltenen Silage, da sie über den Luftsauerstoffanteil die im Silo auftretenden chemischen Reaktionen beeinflusst.

Wenn das Futter gut verdichtet wird, ist der Vorrat an Sauerstoff begrenzt und die sich ergebende säurebasierte Vergärung bewirkt eine Zerlegung der vorhandenen Kohlenhydrate in Essig-, Butter und Milchsäure. Ein derartiges Silageprodukt wird als saure Silage bezeichnet. Wenn jedoch andererseits das Futter nicht gut verdichtet oder lose abgelegt wird oder das Silo erst nach und nach gefüllt wird, verläuft die Oxidation schneller und die Temperatur steigt an. In diesen Fällen kann der eindringende Sauerstoff der Luft zur Produktion von Ammoniak oder Buttersäure führen und die Silage kann im schlimmsten Fall vergiften und nicht mehr als Tierfutter verwendet werden. Falls der Gärprozess nicht sorgfältig durchgeführt und kontrolliert wird, nimmt somit die saure Silage durch übermäßige Produktion an Ammoniak oder Buttersäure (letztere ist für den Geruch ranziger Butter verantwortlich) einen unangenehmen Geruch an. Für die Herstellung von Silage hoher Qualität ist es demnach wichtig, das Futter hinreichend gut zu verdichten, um den nachteiligen Einfluss von Sauerstoffeinschlüssen zu vermeiden.

Im Stand der Technik wurde eine Automatisierung der Verdichtung vorgeschlagen. In der EP 3 403 487 A1 wird ein Verfahren zum Befüllen eines Silos mit Erntegut beschrieben, bei dem das Erntegut zunächst im Silo verteilt und sich zeitlich daran anschließend durch eine autonom arbeitende Maschine verdichtet wird. Letztere wird anhand der Höhe des aufgeschichteten Emteguts, der von ihr erzielten Verdichtung, und anhand der Trockenmasse, Schnittlänge und Feuchtigkeit des Ernteguts derart kontrolliert, dass eine gewünschte Verdichtung erzielt.

Auch in der EP 3 403 488 A1 wird eine automatische Verdichtung von Silage beschrieben. Dort wird ein zu erzielender Verdichtungsgrad in Abhängigkeit von einem Parameter der zur Verdichtung verwendeten Arbeitsmaschine, einem Parameter des Emteguts und der Anzahl der durchgeführten Verdichtungszyklen ermittelt und darauf basierend die Anzahl der noch durchzuführenden Verdichtungszyklen bestimmt. Diese Vorgehensweise kann auch ortsspezifisch, d.h. auf einzelne definierte Flächensegmente der zu verdichtenden Oberfläche bezogen, erfolgen. Es wird somit ein bestimmtes Flächensegment nicht mehr verdichtet, wenn die beabsichtigte Verdichtung erreicht ist, indem dann eine andere Bahn abgefahren wird.

### Aufgabe

Bei den Vorgehensweisen nach EP 3 403 487 A1 und EP 3 403 488 A1 wird das Verdichtungsfahrzeug mit zeitlich konstanter Geschwindigkeit (abgesehen von Bewegungsrichtungsänderungen) und mit konstanter Verdichtungswirkung (Andruckkraft) über die Silage bewegt. Zur Anpassung an eine gewünschte Verdichtung wird allenfalls die Verdichtungszeit, d.h. die Anzahl der Vorgänge, bei denen das Verdichtungsfahrzeug über die Silage bewegt wird, variiert, welche in EP 3 403 488 A1 für unterschiedliche Bahnen zusätzlich noch unterschiedlich gewählt werden kann, abhängig von der erzielten Verdichtung.

In der Realität sind Silagehaufen jedoch nicht über ihre gesamte Fläche homogen, weder hinsichtlich der Höhe (üblicherweise ist sie in der Mitte am größten) noch hinsichtlich der Eigenschaften des Ernteguts. Die im Stand der Technik verwendete, zeitlich konstante Verdichtungswirkung der Verdichtungsmaschine hat somit zur Folge, dass einige Bereiche des Silos noch überfahren und verdichtet werden, obwohl das nicht mehr erforderlich wäre, weil andere Bereiche noch zu verdichten sind. Im Ergebnis wird somit mehr Energie und Arbeitszeit zur Verdichtung benötigt als erforderlich wäre.

Die vorliegende Erfindung hat sich daher die Aufgabe gestellt, den erwähnten Nachteil zu vermeiden oder zumindest zu reduzieren.

### Lösung

Die vorliegende Erfindung wird durch die Patentansprüche definiert.

Ein Verfahren zur Verdichtung von Silage in einem Silo, beim dem ein unter Kontrolle durch eine elektronische Steuereinrichtung stehendes Verdichtungsfahrzeug die im Silo abgelegte Silage unter Ausübung einer Verdichtungswirkung entlang eines Verdichtungsweges überfährt, beinhaltet, dass die Verdichtungswirkung des Verdichtungsfahrzeugs entlang des Verdichtungsweges durch eine Einwirkung der Steuereinrichtung ortsabhängig variiert wird.

Mit anderen Worten wird die Verdichtungswirkung des Verdichtungsfahrzeugs auf seinem (in der Regel mehrmals - für eine im Vorab oder anhand der erzielten Verdichtung im Nachhinein festgelegte Anzahl an Überfahrten - abgefahrenen) Verdichtungsweg über die Silage beispielsweise abhängig von lokalen Eigenschaften der Silage ortsabhängig kontrolliert, um die Verdichtungswirkung an die lokalen Eigenschaften der Silage anzupassen. Auf diese Weise werden die eingangs erwähnten Nachteile vermieden.

Zur Variation der Verdichtungswirkung kann die Geschwindigkeit des Verdichtungsfahrzeugs und/oder der vom Verdichtungsfahrzeug auf die Silage ausgeübte Druck variiert werden. Der vom Verdichtungsfahrzeug ausgeübte Druck kann durch Verstellung des Reifendrucks des Verdichtungsfahrzeugs und/oder Verstellung der Auflagekraft eines Verdichtungswerkzeugs variiert werden, beispielsweise durch einen Aktor zur Verstellung der Position eines Unterlenkers oder der Länge eines Oberlenkers und/oder Unterlenkers einer Dreipunktkupplung.

Die Verdichtungswirkung kann anhand von Eigenschaften der Silage festgelegt werden. Anhand der Eigenschaften der Silage kann eine zu erzielende Dichte der Silage ermittelt und zur Bestimmung der zum Erreichen der zu erzielenden Dichte der Silage anzuwendenden Verdichtungswirkung verwendet werden. Zur Festlegung der Verdichtungswirkung kann eine oder mehrere der folgenden Eigenschaften der Silage verwendet werden: ortsspezifische Dicke der Schicht der zu verdichtenden Silage, Feuchtigkeit der Silage, Art der in der Silage enthaltenen Pflanzen und ihre Schnittlänge.

Die erzielte Verdichtung der Silage kann erfasst und zur Kontrolle der Verdichtungswirkung genutzt werden, sei es im Sinne einer Beendigung der Verdichtung, wenn die gewünschte Verdichtungswirkung erzielt wird, oder zur Veränderung der Verdichtungswirkung abhängig von der erzielten Verdichtung. Bei einer anderen Ausführungsform, die ohne Rückkopplung der erzielten Verdichtung an die Steuereinrichtung auskommt, wird die Verdichtungswirkung im Vornherein festgelegt und nicht durch Messung der erzielten Verdichtung überprüft. Ohne Rückkopplung durch Messung der Verdichtung erfolgt eine Abschätzung der erzielten Verdichtung auf Basis der ortsabhängig bereits aufgebrachten Verdichtungsleistung und des ortsabhängig vorliegenden Materials (Schichtdicke, Feuchte, Schnittlänge).

Die Steuereinheit kann die Verdichtungswirkung direkt und/oder über eine Bedienerschnittstelle kontrollieren.

Eine elektronische Steuereinrichtung zur Kontrolle eines Verdichtungsfahrzeugs zur Verdichtung von Silage in einem Silo, welches eingerichtet ist, die im Silo abgelegte Silage unter Kontrolle durch die elektronische Steuereinrichtung unter Ausübung einer Verdichtungswirkung entlang eines Verdichtungsweges zu überfahren, kann konfiguriert sein, die Verdichtungswirkung des Verdichtungsfahrzeugs entlang des Verdichtungsweges ortsabhängig zu variieren.

### Ausführungsbeispiel

In den Figuren wird eine Ausführungsform der Erfindung gezeigt, die im Folgenden näher erläutert wird. Es zeigen:
- Fig. 1: eine Draufsicht auf ein Silo mit einem dort arbeitenden Verdichtungsfahrzeug,
- Fig.2: eine seitliche Ansicht des Silos der Figur 1 sowie einer Erntekette, und
- Fig. 3: ein Flussdiagramm, nach dem eine Steuereinrichtung des Verdichtungsfahrzeugs arbeitet.

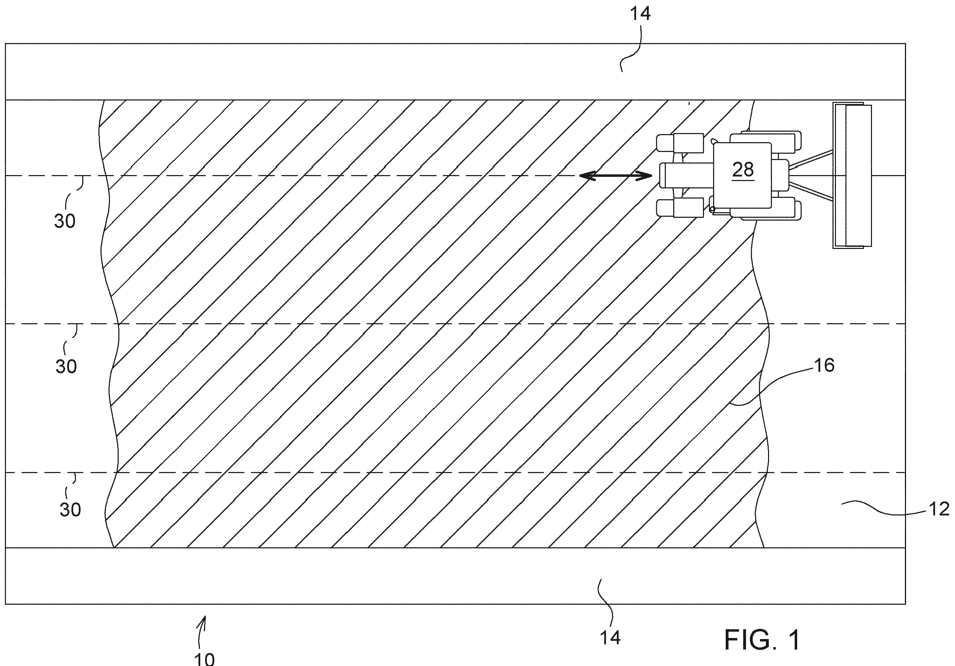

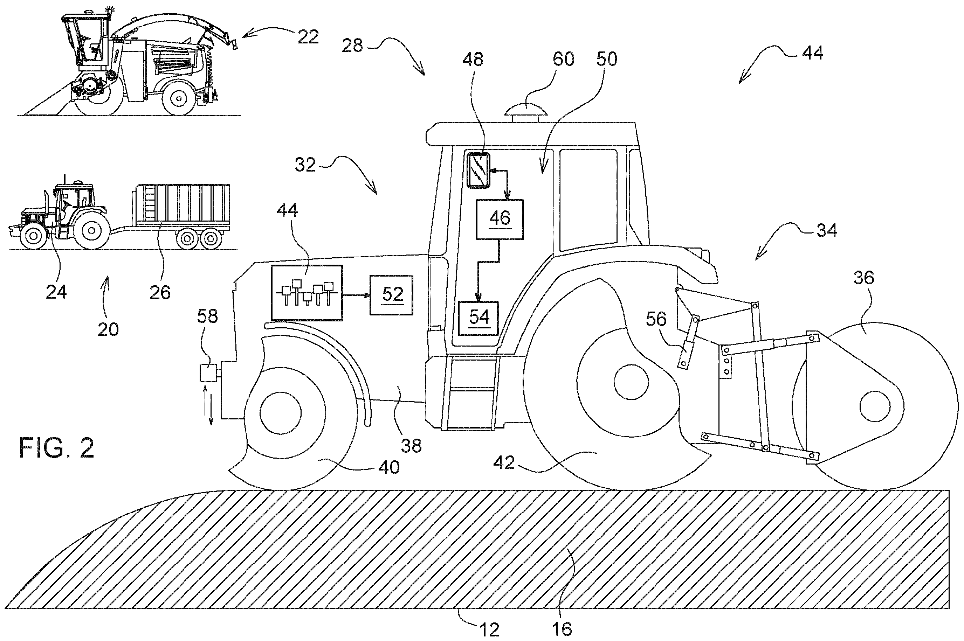

In der Figur 1 ist ein Silo 10 in Form eines so genannten Silobunkers gezeigt. Das Silo umfasst einen Boden 12 und seitliche Wände 14, die üblicherweise sämtlich aus Beton hergestellt sind. Das Silo 10 ist als Fahrsilo ausgeführt, in welches zerkleinerte Grünpflanzen eingebracht, verteilt und verdichtet werden, wie im Stand der Technik an sich bekannt (EP 3 403 487 A1, EP 3 403 488 A1, deren gesamte Offenbarung durch Verweis mit in die vorliegenden Unterlagen aufgenommen wird), und ist daher nach links und rechts hin offen. Die Grünpflanzen können mittels einer Erntekette 20 geerntet werden, die aus einem Erntefahrzeug 22 in Form eines Feldhäckslers und einen Zugfahrzeug 24 mit Anhänger 26 besteht, wie in der Figur 2 schematisch dargestellt. Das Erntegut wird vom Anhänger 26 direkt auf das Silo 10 abgegeben oder zunächst in dessen Nähe auf einem Haufen abgelegt und durch ein geeignetes Fahrzeug oder andere Mittel auf dem Silo 10 verteilt.

Eine andere, nicht zeichnerisch dargestellte Ausführungsform einer Erntekette, die sich insbesondere zur Grasernte eignet, kann einen Ackerschlepper und einem davon gezogenen Ladewagen umfassen. Das Erntegut wird anschließend durch ein Verdichtungsfahrzeug 28 verdichtet, das entlang von Überfahrtwegen 30 über das Silo 10 bewegt wird. In der Figur 1 wird davon ausgegangen, dass das Verdichtungsfahrzeug 28 ein relativ breites Verdichtungsgerät 36 (s. Figur 2) bewegt, welches eine relativ große Arbeitsbreite aufweist, sodass dort nur drei Überfahrtwege 30 eingezeichnet sind. Finder kein Verdichtungsgerät 36 Verwendung, sondern erfolgt die Verdichtung nur durch die Räder 40, 42 des Verdichtungsfahrzeugs 28, sind selbstverständlich wesentlich mehr Überfahrtwege 30 zurückzulegen.

Die im Folgenden als Silage 16 bezeichneten, zerkleinerten Grünpflanzen können bei der Ernte oder während des oder nach dem Einlagern mit einem Siliermittel beaufschlagt werden, um die Vergärung zu verbessern. Zudem wird die Silage 16 nach dem Verdichten nach oben und zu den offenen Seiten des Silos 10 hin mit einer Folie abgedeckt, um sie gegen den Sauerstoff der umgebenden Luft abzuschirmen.

Das Verdichtungsfahrzeug 28 ist in der Figur 2 detaillierter dargestellt. Es setzt sich aus einem Ackerschlepper 32 und einem an seiner Dreipunktkupplung 34 angebrachten Verdichtungsgerät 36 in Form einer Walze zusammen. Das Verdichtungsgerät 36 könnte auch entfallen bzw. durch ein Ballastgewicht ersetzt werden. Die Verdichtung erfolgt in diesem Fall durch die Räder 40, 42 des Verdichtungsfahrzeugs 28. Als Verdichtungsfahrzeug 28 könnte anstelle eines Ackerschleppers 32 auch eine Straßenwalze oder ein beliebiges anderes Fahrzeug, z.B. eine Pistenraupe, verwendet werden.

Der Ackerschlepper 32 umfasst ein tragendes Gestell 38, das sich auf lenkbaren Vorderrädern 40 und antreibbaren Hinterrädern 42 abstützt, die mit der Kurbelwelle eines Verbrennungsmotors 44 in drehmomentschlüssiger Antriebsverbindung stehen. Eine elektronische Steuereinrichtung 46 (deren Rechenleistung auch ausgelagert werden könnte, sei es auf einen beabstandeten, stationären oder als Mobilgerät ausgeführten Rechner, z.B. des Bedieners, oder die Cloud) ist mit einer Bedienerschnittstelle 48 verbunden, die dem Arbeitsplatz eines Bedieners in einer Kabine 50 zugeordnet ist. Die Steuereinrichtung 14 ist weiterhin mit einer selbsttätigen Lenk- und Geschwindigkeitskontrolleinrichtung 52, einer Reifendruckregelung 54 und einem Aktor 56 (Kraftheber) zur Verstellung der Position des Unterlenkers der Dreipunktkupplung 34 signalübertragend verbunden und ist konfiguriert, diese selbststätig zu kontrollieren. Durch den Aktor 56 kann die Andruckkraft des Verdichtungsgeräts 36 variiert und letzteres ausgehoben werden.

Das Verdichtungsfahrzeug 28 wird beim Einlagern der Silage 16 zwecks deren Verdichtung entlang der Überfahrtwege 30 bewegt, d.h. parallel zu den Seitenwänden 14 des Silos 10 hin- und hergefahren, wobei ein Überfahrtweg 30 abgefahren wird, bis die auf dem jeweiligen Überfahrtweg 30 liegende Silage 16 hinreichend verdichtet ist und dann ein weiterer Überfahrtweg 30 abgefahren. Es wäre auch denkbar, nacheinander alle Überfahrtwege 30 ein- oder mehrmals abzufahren, bis auf einem und schließlich allen der Überfahrtwege 30 die gewünschte Verdichtung erreicht ist. Insbesondere, wenn kein Verdichtungsgerät 36 an das Verdichtungsfahrzeug 28 angeschlossen ist, findet die Verdichtung entlang weiterer Überfahrtwege 30 als in der Figur 1 gezeigt statt. Auch muss das Verdichtungsgerät 36 nicht über seine gesamte Breite gleichmäßig und gleichzeitig verdichten, was dazu führt, dass (gegenüber der in Figur 1 gezeigten Situation) zusätzliche Überfahrtwege 30 zurückzulegen sind, um im Ergebnis die gewünschte Verdichtungswirkung für die gesamte Silage 16 zu erzielen. Anschließend wird eine Schicht mit neuer Silage 16 aufgebracht und wieder verdichtet, bis das Silo 10 gefüllt ist. Bei einer anderen Vorgehensweise wäre es jedoch auch möglich, das Silo 10 in horizontaler Richtung nach und nach zu befüllen und erst dann zu verdichten, wenn es gefüllt ist. Auch eine Kombination der beiden Vorgehensweisen ist denkbar.

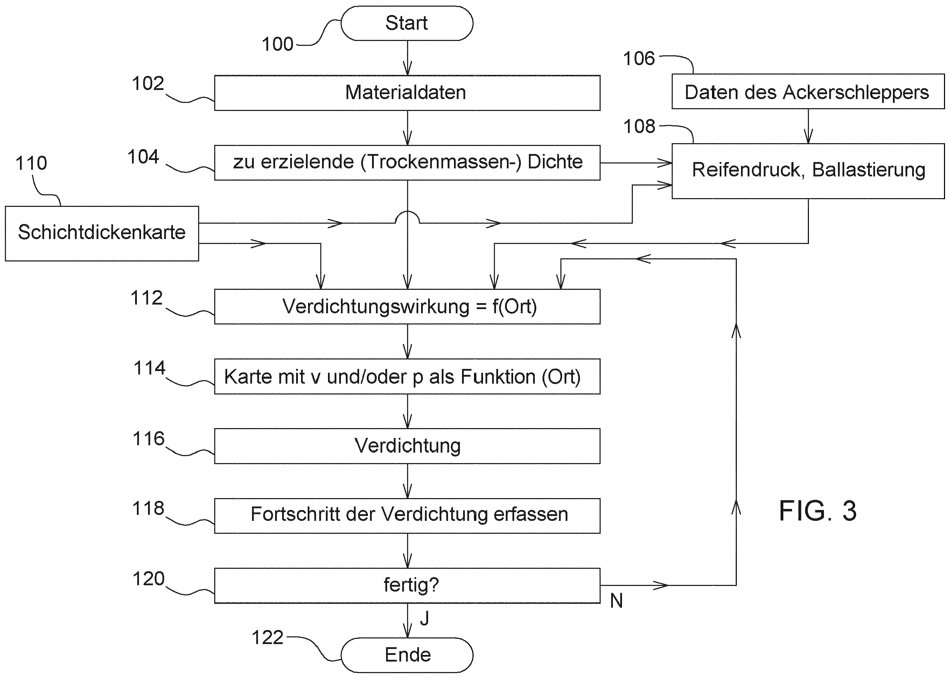

Es wird nun auf die Figur 3 verwiesen, in der die Vorgehensweise der Steuereinrichtung 46 des Verdichtungsfahrzeugs 28 beim Verdichten detailliert dargestellt ist.

Nach dem Start im Schritt 100 folgt der Schritt 102, in welchem Materialdaten erfasst und der elektronischen, mit einem Speicher und einem Prozessor ausgestatteten Steuereinrichtung 46 zugeführt werden. Die Materialdaten betreffen Eigenschaften der Silage 16, die durch Sensoren an Bord des Erntefahrzeugs 22 gesammelt werden können. Bei den Eigenschaften handelt es sich insbesondere um die Feuchtigkeit (die beispielsweise mit einem Nahinfrarotspektrometer gemessen werden kann, s. DE 199 22 867 A1), einen vorgegebenen Soll- oder gemessenen Istwert der Schnittlänge und die von einem Bediener des Erntefahrzeugs 22 oder des Verdichtungsfahrzeugs 28 eingegebenen oder selbsttätig erkannten Art des Emteguts (z.B. ob es sich um Mais (Ganzpflanzensilage oder Fruchtstände) oder Gras handelt), und um die Masse oder das Volumen einer Füllung des Anhängers 26, die seitens des Emtefahrzeugs 22 anhand des hochintegrierten Durchsatzes oder seitens des Anhängers 26 durch Wägung ermittelt werden können. Die seitens des Emtefahrzeugs 22 erfassten Daten können drahtlos (z.B. über eine Mobilfunkverbindung) oder über einen dem Zugfahrzeug 24 oder Anhänger 26 zugeordneten Speicher auf die Steuereinrichtung 46 übertragen werden, z.B. über Nahfeldkommunikation oder ein RFID-Protokoll. Üblicherweise werden hier Durchschnittswerte der Feuchtigkeit und der Schnittlänge verwendet. Falls einer der Messwerte einer unerwarteten Variation unterliegen sollte, kann auf übliche Vorgehensweisen zur Korrektur zurückgegriffen werden, z.B. indem Ausreißer ignoriert werden. Die Materialdaten, vor allem hinsichtlich der Feuchtigkeit, könnten evtl. auch mit einem entsprechenden Sensor am Verdichtungsfahrzeug 28 gemessen werden, der zusätzlich zum Sensor 58 dort vorgesehen sein kann, oder es erfolgt eine händische Messung durch eine Bedienperson mit einem geeigneten Sensor, dessen Messwert der Steuereinrichtung 46 zugeführt wird.

Im Schritt 104 wird durch die Steuereinrichtung 46 anhand der Materialdaten eine durch das Verdichtungsfahrzeug 28 am Ende des Verdichtungsvorgangs zu erzielende Dichte der Silage 16 berechnet. Hierbei kann ins besondere eine so genannte Trockenmassendichte berechnet werden, d.h. die Menge der Trockenmasse der Silage 16 (gemessen in Gewichts- oder Masseneinheiten wie N oder kg) bezogen auf (geteilt durch) das zugehörige Volumen der Silage 16.

Im Schritt 106 werden Daten hinsichtlich des Ackerschleppers 28 aus dem Speicher der Steuereinrichtung 46 ausgelesen. Diese Daten betreffen physische Eigenschaften des als Ackerschlepper 32 ausgeführten Verdichtungsfahrzeugs 28, wie Masse, Reifengröße und den von der Reifendruckregelung 54 einstellbaren Druckbereich in den Reifen der Vorder- und Hinterräder 40, 42, und - wenn ein Verdichtungsgerät 36 vorhanden ist - Daten des Verdichtungsgeräts (Masse und Abmessungen).

Im Schritt 110 wird die Dicke (vertikale Abmessung) der zu verdichtenden Schicht der Silage 16 evaluiert. Hierzu kann auf Daten zurückgegriffen werden, die während der Verteilung der Silage 16 im Silo 10 gewonnen wurden, d.h. auf Einstell- oder Messdaten einer Verteilmaschine, die die Silage 16 verteilt hat, z.B. hinsichtlich der Höhe eines Schiebeschilds, mit dem die Silage 16 über das Silo geschoben und verteilt wird. Alternativ oder zusätzlich kann eine Messung der Dicke der zu verdichtenden Schicht der Silage 16 durch einen geeigneten Sensor 58 des Verdichtungsfahrzeugs 28 erfolgen, der beispielsweise mit Radarwellen arbeitet. Anhand seiner bekannten, eigenen Position und einer laufzeitbasierten Messung des Abstands zu der Stelle, an der die abgestrahlten Wellen durch eine untere, bereits verdichtete Schicht oder (falls noch keine verdichtete Schicht vorhanden sein sollte) vom Boden 12 reflektiert werden, kann der Sensor 58 die Dicke der Schicht erkennen. Dieser Sensor 58 kann alternativ oder zusätzlich auch die Dichte der Silage 16 erfassen. Der Sensor 58 kann, wie in der Figur 2 gezeigt, an der Vorderseite des Verdichtungsfahrzeugs 28 angebracht sein, oder an einer beliebigen anderen Stelle, oder an einem anderen Fahrzeug oder er wird von Hand gehalten, um die Dicke und/oder Dichte der zu vermessenden Schicht zu erfassen. Diese Daten werden ortsspezifisch erfasst, wozu auf ein satellitengestütztes Positionsbestimmungssystem 60 zurückgegriffen werden kann.

Man könnte alternativ oder zusätzlich zur beschriebenen Vorgehensweise die Schichtdicke mit einer am Verdichtungsfahrzeug 28 befestigen Stereokamera erfassen, und/oder es könnten auch mehrere ortsfeste Kameras das Silo ansehen, indem die Kamera fortlaufend (auch beim Verdichten) die Höhe der Oberfläche relativ zu ortsfesten Punkten abtastet, dann wieder beim Verteilen abtastet und die Differenz gebildet wird. Weiterhin wäre möglich, die Schichtdicke mit einem Positionsbestimmungssystem wie GPS zu machen, das auch die Höhe des Verdichtungsfahrzeugs 28 erfasst, um in Verbindung mit der erfassten Höhe eines beim Verteilen der Silage 16 verwendeten Schiebeschilds oder dergleichen die Dicke der Silageschicht zu messen.

Die Ergebnisse der Schritte 104, 106 und 110 werden im Schritt 108 verarbeitet, um dort einen zur zu erzielenden Verdichtung des Ernteguts geeigneten Reifendruck für die Vorder- und Hinterräder 40, 42 zu bestimmen und/oder- falls ein Verdichtungsgerät 36 vorhanden ist, was durch Bedienereingabe in die Bedienerschnittstelle 48 oder eine selbsttätige Erkennung des Verdichtungsgeräts 36, sei es durch eine Kamera oder eine elektronische Identifizierung des Verdichtungsgeräts 36 z.B. über ein Bussystem oder eine drahtlose Übermittlung (z.B. RFID o.ä.) erkennbar ist - eine angemessene Andruckkraft für das Verdichtungsgerät 36 festzulegen, die zur Einstellung des Aktors 56 dient. Hierzu müsste der Aktor 56 doppeltwirkend ausgeführt sein, um es zu ermöglichen, die Unterlenker nach unten zu ziehen. Alternativ oder zusätzlich könnte man den Oberlenker der Dreipunktkupplung als Aktor 56 ausführen, um mit dem Oberlenker das Verdichtungsgerät 36 nach unten drücken zu können. Dabei würden die Hinterräder 42 entlastet und die Anpresskraft des Verdichtungsgeräts 36 vergrößert, wenn der Oberlenker durch den Aktor 56 verlängert wird. Analog könnte man auch mit den Unterlenkern vorgehen, um durch den Aktor 56 ihre Länge und somit die Anpresskraft des Verdichtungsgeräts 36 zu variieren.

Der Reifendruck wird primär für den Fall festgelegt, dass kein Verdichtungsgerät 36 vorhanden sein sollte, d.h. die Verdichtung der Silage 16 nur durch die Vorder- und Hinterräder 40, 42 erfolgt.

Im Schritt 108 kann insbesondere anhand der zu erzielenden Trockenmassendichte (Schritt 104) und des Maximalwerts der im Schritt 110 erfassten Dicke der jeweils zu verdichtenden Schicht ein ermittelt werden, welcher Druck zumindest aufzubringen ist. Sollte anhand der Daten des Verdichtungsfahrzeugs 28 erkennbar sein, dass dieser Druck nicht erzielbar ist, kann über die Bedienerschnittstelle 48 eine Warnung an den Bediener gegeben werden. Es könnte in diesem Fall auch ein Ballastierungsvorschlag an den Bediener des Verdichtungsfahrzeugs 28 gegeben werden (s. EP 3 384 746 A1, deren komplette Offenbarung durch Verweis mit in die vorliegenden Unterlagen aufgenommen wird), damit er ein geeignetes Ballastgewicht an einer hinteren und/oder vorderen Schnittstelle des Ackerschleppers 32 anbringen kann.

Basierend auf den Ergebnissen der Schritte 104 und 110 wird im Schritt 112 eine zu erzielende Verdichtungswirkung als Funktion des Ortes auf dem Silo 10 berechnet. Diese hängt u.a. von der lokalen Dicke der zu verdichtenden Schicht (aus Schritt 110 bekannt) und von der zu erzielenden Dichte (aus Schritt 104 bekannt) und ggf. von der gemessenen Dichte der zu verdichtenden Schicht ab. Es wird somit im Schritt 112 festgelegt, in welchem Maße (d.h. mit welcher Verdichtungswirkung) die Silage 16 ortsspezifisch zu verdichten ist, d.h. welcher Druck wie lange auf die unterschiedlichen Stellen des Silos 10 auszuüben ist. Es kann im Schritt 112 auch berücksichtigt werden, wie dick die unter der zu verdichtenden Schicht der Silage 16 liegende ältere, bereits verdichtete Schicht ist und in welchem Maße diese verdichtet wurde. Die horizontale Auflösung der im Schritt 112 berechneten Verdichtungswirkung kann an die Größe des zur Verdichtung der Silage 16 dienenden Mittel angepasst werden und ist somit bei einer nur durch die Vorder- und Hinterräder 40, 42 erfolgenden Verdichtung größer als bei Verdichtung durch das Verdichtungswerkzeug 36. Insbesondere wird die Verdichtungswirkung mit geeigneter horizontaler Auflösung in Vorwärts- und Querrichtung entlang der Verdichtungswege 30 bestimmt, die in an sich bekannter Weise bei bekannten Abmessungen des Verdichtungsfahrzeugs 28 bzw. Verdichtungsgeräts 36 und des Silos 10 vorplanbar sind. Die Abmessungen des Silos 10 und dessen Lage können manuell eingegeben, aus einer Karte ausgelesen oder durch Befahren mit gleichzeitiger Positionserfassung ermittelt werden.

Zudem kann im Schritt 112 berücksichtigt werden, welche Form die Silage 16 letztendlich haben soll, d.h. welche Neigung die Endbereiche der Silage 16 im Silo 10 und deren Mitte in Quer- und/oder Längsrichtung haben sollen. Diese Werte können anfangs über die Bedienerschnittstelle 48 eingegeben werden. Diese Werte können auch schon bei der Verteilung der Silage 16 berücksichtigt werden und vom Verteilfahrzeug an das Verdichtungsfahrzeug 28 elektronisch übermittelt werden.

Im folgenden Schritt 114 erstellt die Steuereinrichtung 46 unter Verwendung der im Schritt 112 berechneten, ortsspezifischen Verdichtungswirkung eine Karte, in der für das Silo 10 ortsspezifisch eingetragen wird, mit welcher Geschwindigkeit v das Verdichtungsfahrzeug 28 sich bewegen soll. Hierbei werden fest vorgegebene oder durch den Bediener über die Bedienerschnittstelle 48 einstellbare Grenzen der Geschwindigkeit berücksichtigt. Insbesondere wenn während des Verdichtungsvorgangs ein Bediener in der Kabine 50 sein sollte, kann zudem die Beschleunigung innerhalb bestimmter, komfortbedingter Grenzen gehalten werden. Die Karte kann alternativ oder zusätzlich den anzuwendenden Druck p enthalten, der mittels der Reifendruckregelung 54 (bei Verdichtung durch die Vorder- und Hinterräder 40, 42) und/oder des Aktors 56 (bei Verdichtung durch das Verdichtungswerkzeug 36) einstellbar ist, bzw. zugehörige Vorgabewerte für die Reifendruckregelung 54 und/oder den Aktor 56. Die Geschwindigkeit v und/oder der zu erzielende Druck p (bzw. die zugehörige Einstellung der Reifendruckregelung 54 und/oder des Aktors 56) werden im Schritt 114 (unter Berücksichtigung der erwähnten Nebenbedingungen für Geschwindigkeit und Beschleunigung, wozu eine modellbasierte Kontrolle mit einer Kostenfunktion zur Berücksichtigung der Nebenbedingungen zur Anwendung kommen kann, s. EP 3 348 130 A1 und dort zitierte Referenzen) derart berechnet, dass die im Schritt 112 berechnete Verdichtungswirkung erzielt wird. Zudem kann die Karte die Anzahl der beabsichtigten Überfahrten des Verdichtungsfahrzeugs 28 entlang der jeweiligen Verdichtungswege 30 enthalten.

Hierbei können die Vorgabewerte für die Geschwindigkeit v und/oder den zu erzielende Druck p (bzw. die zugehörige Einstellung der Reifendruckregelung 54 und/oder des Aktors 56) für denselben Überfahrtweg 30 gleichbleiben oder variieren, d.h. für aufeinander folgende Überfahrten sukzessive größer oder kleiner werden. Das kann im vorab schon so geplant werden oder als Reaktion auf eine Messung der erzielten Verdichtung erfolgen. Beispielsweise kann bei einem ersten Zurücklegen eines bestimmten Überfahrtweges 30 zunächst eine relativ große Verdichtungswirkung gewählt werden und diese beim zweiten Zurücklegen desselben Überfahrtweges 30 vermindert werden (oder umgekehrt).

Im folgenden Schritt 116 erfolgt die Verdichtung der Silage 16 durch das Verdichtungsfahrzeug 28. Letzteres wird entlang der Verdichtungswege 30 bewegt, sei es manuell durch den Bediener, dem von der Steuereinrichtung 46 über die Bedienerschnittstelle 48 Hinweise gegeben werden, wie er lenken und wie schnell er fahren soll, oder selbsttätig durch entsprechende Ansteuerung der Lenk- und Geschwindigkeitskontrolleinrichtung 52 durch die Steuereinrichtung 46. Die Lenkung entlang der Verdichtungswege 30 erfolgt insbesondere anhand der Signale des Positionsbestimmungssystems 60. Im Schritt 116 kann, wie oben beschrieben, jeder der Verdichtungswege 30 mehrfach abgefahren werden oder es werden zunächst nacheinander unterschiedliche Verdichtungswege 30 einmal oder mehrmals abgefahren, um den Bediener (insofern er sich während des Verdichtungsvorgangs in der Kabine 50 befindet) nicht zu langweilen. Im Schritt 116 wird die Geschwindigkeit und/oder der Druck entlang des jeweils abgefahrenen Verdichtungsweges lokal an die im Schritt 114 bestimmten Werte angepasst. D.h. wenn die Geschwindigkeit des Verdichtungsfahrzeugs 28 mehr als ein bestimmter Schwellenwert von dem Sollwert aus Schritt 114 für die jeweilige Position auf dem Silo 10 abweicht, wird das Verdichtungsfahrzeug 28 beschleunigt oder verzögert. Analog wird der Aktor 56 und/oder die Reifendruckregelung 54 durch die Steuereinrichtung 46 direkt oder durch einen Bediener nach entsprechender Anweisung über die Bedienerschnittstelle 48 kommandiert, die jeweilige Einstellung an die Vorgabe aus Schritt 114 anzupassen. Im Schritt 116 erfolgt demnach die Verdichtung der Silage 16 mit einer entlang des Verdichtungswegs 30 variablen Verdichtungswirkung.

Während der Verdichtung (Schritt 116) wird im Schritt 118 der Fortschritt der Verdichtung erfasst. Hierzu kann auf den Sensor 58 zurückgegriffen werden, der erfasst, in welchem Maße die Schicht der Silage 16 entlang des Verdichtungsweges 30 nach und nach komprimiert wird. Diese Daten können auch durch eine Messung der vertikalen Höhe des Verdichtungsfahrzeugs 28 (über Meereshöhe) mit dem Positionsbestimmungssystem 60 erfolgen. Auch eine mit dem Sensor 58 erstellte Dichtemessung kann im Schritt 118 erfolgen. Bei einer anderen Ausführungsform kann die Messung der erzielten Dicken- und/oder Dichtenänderung entfallen und der Fortschritt wird anhand der Zahl der zurückgelegten Überfahrtwege 30 und ggf. der zugehörigen Arbeitsparameter bei der Verdichtung (Geschwindigkeit v und Druck p) ermittelt.

Im folgenden Schritt 120 wird geprüft, ob die gewünschte Verdichtung für das gesamte Silo 10 erzielt worden ist. Diese Prüfung kann, wenn im Schritt 118 die Werte des Sensors 58 und/oder die vertikale Höhe des Verdichtungsfahrzeugs 28 erfasst werden, anhand eines Vergleichs der aus den erfassten Werten abgeleiteten (d.h. gemessenen) Dichte mit der Solldichte aus Schritt 104 erfolgen. Alternativ (insbesondere bei Wegfall der Messung der erzielten Dicken- und/oder Dichtenänderung) oder zusätzlich wird im Schritt 120 geprüft, ob die im Schritt 114 bestimmte Anzahl der Überfahrten für alle Verdichtungswege 30 durchgeführt wurde. Sollte die gewünschte Verdichtung schon erzielt worden sein, wird das Vorgehen im Schritt 122 beendet. Anschließend kann dann eine neue Schicht an Silage 16 auf dem Silo 10 verteilt und wieder mit dem Schritt 100 begonnen werden oder wenn kein Erntegut mehr aufzubringen ist, wird die Silage 10 abgedeckt.

Falls sich im Schritt 120 ergibt, dass die gewünschte Verdichtung noch nicht für das gesamte Silo erzielt ist, folgt wieder der Schritt 112. In diesem Schritt 112 kann beim zweiten, dritten etc. Aufrufen die ortsspezifisch anzuwendende Verdichtungswirkung aktualisiert werden, um die inzwischen geänderte Verdichtung der Silage 10 ortsspezifisch zu berücksichtigen. An hinreichend verdichteten Stellen wird somit die anzuwendende Verdichtungswirkung auf null gesetzt, und Verdichtungswege 30, über deren gesamte Länge eine hinreichende Verdichtung erzielt wurde, werden als "fertig" verzeichnet und in den folgenden Schritten 114 bis 118 nicht mehr berücksichtigt bzw. abgefahren.

Im Schritt 112 kann weiterhin analysiert werden, ob die im Schritt 114 verwendeten Einstellungen (Geschwindigkeit und/oder Reifendruck und/oder Andruckkraft des Verdichtungswerkzeugs 36) zu einem erwarteten Ergebnis der Verdichtung geführt haben, denn letzteres ist (solange die Messung der erzielten Dicken- und/oder Dichtenänderung nicht entfällt) aus dem Schritt 118 bekannt. Nötigenfalls kann somit im Schritt 112 eine Korrektur der Verdichtungswirkung erfolgen. Es handelt sich in diesem Fall um ein System mit geschlossener Rückkopplungsschleife, das in selbstlernender Weise auf die von ihm erzielte Verdichtungswirkung reagiert.

Während der Durchführung der Verdichtung kann dem Bediener des Verdichtungsfahrzeugs 28 über die Bedienerschnittstelle 48 eine Karte angezeigt werden, in welcher der Status der Verdichtung und/oder die noch durchzuführenden Überfahrten über das Silo 10 angezeigt werden. Bei einer Automatisierung des Verdichtungswerkzeugs 28 kann der Bediener dieses - zumindest für die Zeit des Verdichtungsvorganges - verlassen. Er (oder eine beliebige andere Person) kann über eine drahtlose Verbindung mit der Steuereinrichtung 46 die in diesem Absatz erwähnte Karte und/oder beliebige andere Daten von der Steuereinrichtung 46 auf einem stationären oder mobilen Rechner erhalten, damit er über den Arbeitsfortschritt informiert wird.

Im Ergebnis bietet die dargestellte Vorgehensweise der lokalen Variation der Verdichtungswirkung entlang der Verdichtungswege 30 die Vorteile, dass bereits hinreichend verdichtete Stellen nicht unnötig bearbeitet werden und dass somit eine Zeit- und Energieersparnis eintritt.

## Patentansprüche

1. Verfahren zur Verdichtung von Silage (16) in einem Silo (10), beim dem ein unter Kontrolle durch eine elektronische Steuereinrichtung (46) stehendes Verdichtungsfahrzeug (28) die im Silo (10) abgelegte Silage (16) unter Ausübung einer Verdichtungswirkung entlang eines Verdichtungsweges (30) überfährt, **dadurch gekennzeichnet, dass** die Verdichtungswirkung des Verdichtungsfahrzeugs (28) entlang des Verdichtungsweges (30) durch eine Einwirkung der Steuereinrichtung (46) ortsabhängig variiert wird.

2. Verfahren nach Anspruch 1, wobei zur Variation der Verdichtungswirkung die Geschwindigkeit des Verdichtungsfahrzeugs (28) und/oder der vom Verdichtungsfahrzeug ausgeübte Druck variiert wird.

3. Verfahren nach Anspruch 2, wobei der vom Verdichtungsfahrzeug (28) ausgeübte Druck durch Verstellung des Reifendrucks des Verdichtungsfahrzeugs (28) und/oder Verstellung der Auflagekraft eines Verdichtungswerkzeugs (36), beispielsweise durch einen Aktor (56) zur Verstellung der Position eines Unterlenkers oder der Länge eines Oberlenkers und/oder Unterlenkers einer Dreipunktkupplung, variiert wird.

4. Verfahren nach einem der Ansprüche 1 bis 3, wobei die Verdichtungswirkung anhand von Eigenschaften der Silage (16) festgelegt wird.

5. Verfahren nach Anspruch 4, wobei anhand der Eigenschaften der Silage (16) eine zu erzielende Dichte der Silage (16) ermittelt und zur Bestimmung der zum Erreichen der zu erzielenden Dichte der Silage (16) anzuwendenden Verdichtungswirkung verwendet wird.

6. Verfahren nach Anspruch 4 oder 5, wobei zur Festlegung der Verdichtungswirkung eine oder mehrere folgender Eigenschaften der Silage (16) verwendet werden: ortsspezifische Dicke der Schicht der zu verdichtenden Silage (16), Feuchtigkeit der Silage (16), Art der in der Silage (16) enthaltenen Pflanzen, und die Schnittlänge der Silage (16).

7. Verfahren nach einem der vorhergehenden Ansprüche, wobei die erzielte Verdichtung der Silage (16) erfasst und zur Kontrolle der Verdichtungswirkung genutzt wird.

8. Verfahren nach einem der vorhergehenden Ansprüche, wobei die Steuereinheit (46) die Verdichtungswirkung direkt und/oder über eine Bedienerschnittstelle (48) kontrolliert.

9. Elektronische Steuereinrichtung (46) zur Kontrolle eines Verdichtungsfahrzeugs (28) zur Verdichtung von Silage (16) in einem Silo (10), welches eingerichtet ist, die im Silo (10) abgelegte Silage (16) unter Kontrolle durch die elektronische Steuereinrichtung (46) unter Ausübung einer Verdichtungswirkung entlang eines Verdichtungsweges (30) zu überfahren, **dadurch gekennzeichnet, dass** die elektronische Steuereinrichtung (46) konfiguriert ist, die Verdichtungswirkung des Verdichtungsfahrzeugs (28) entlang des Verdichtungsweges (30) ortsabhängig zu variieren.

10. Verdichtungsfahrzeug (28) mit einer Steuereinrichtung (46) nach Anspruch 9.

## Geänderte Patentansprüche

### Geänderte Patentansprüche gemäss Regel 137(2) EPÜ.

1. Verfahren zur Verdichtung von Silage (16) in einem Silo (10), beim dem ein unter Kontrolle durch eine elektronische Steuereinrichtung (46) stehendes Verdichtungsfahrzeug (28) die im Silo (10) abgelegte Silage (16) unter Ausübung einer Verdichtungswirkung entlang eines Verdichtungsweges (30) überfährt, **dadurch gekennzeichnet, dass** die Verdichtungswirkung des Verdichtungsfahrzeugs (28) entlang des Verdichtungsweges (30) durch eine Einwirkung der Steuereinrichtung (46) ortsabhängig variiert wird, indem die Verdichtungswirkung des Verdichtungsfahrzeugs (28) abhängig von lokalen Eigenschaften der Silage ortsabhängig kontrolliert wird, um die Verdichtungswirkung an die lokalen Eigenschaften der Silage anzupassen.

2. Verfahren nach Anspruch 1, wobei zur Variation der Verdichtungswirkung die Geschwindigkeit des Verdichtungsfahrzeugs (28) und/oder der vom Verdichtungsfahrzeug ausgeübte Druck variiert wird.

3. Verfahren nach Anspruch 2, wobei der vom Verdichtungsfahrzeug (28) ausgeübte Druck durch Verstellung des Reifendrucks des Verdichtungsfahrzeugs (28) und/oder Verstellung der Auflagekraft eines Verdichtungswerkzeugs (36), beispielsweise durch einen Aktor (56) zur Verstellung der Position eines Unterlenkers oder der Länge eines Oberlenkers und/oder Unterlenkers einer Dreipunktkupplung, variiert wird.

4. Verfahren nach einem der Ansprüche 1 bis 3, wobei anhand der Eigenschaften der Silage (16) eine zu erzielende Dichte der Silage (16) ermittelt und zur Bestimmung der zum Erreichen der zu erzielenden Dichte der Silage (16) anzuwendenden Verdichtungswirkung verwendet wird.

5. Verfahren nach einem der Ansprüche 1 bis 4, wobei zur Festlegung der Verdichtungswirkung eine oder mehrere folgender Eigenschaften der Silage (16) verwendet werden:
ortsspezifische Dicke der Schicht der zu verdichtenden Silage (16), Feuchtigkeit der Silage (16), Art der in der Silage (16) enthaltenen Pflanzen, und die Schnittlänge der Silage (16).

6. Verfahren nach einem der vorhergehenden Ansprüche, wobei die erzielte Verdichtung der Silage (16) erfasst und zur Kontrolle der Verdichtungswirkung genutzt wird.

7. Verfahren nach einem der vorhergehenden Ansprüche, wobei die Steuereinheit (46) die Verdichtungswirkung direkt und/oder über eine Bedienerschnittstelle (48) kontrolliert.

8. Elektronische Steuereinrichtung (46) zur Kontrolle eines Verdichtungsfahrzeugs (28) zur Verdichtung von Silage (16) in einem Silo (10), welches eingerichtet ist, die im Silo (10) abgelegte Silage (16) unter Kontrolle durch die elektronische Steuereinrichtung (46) unter Ausübung einer Verdichtungswirkung entlang eines Verdichtungsweges (30) zu überfahren, **dadurch gekennzeichnet, dass** die elektronische Steuereinrichtung (46) konfiguriert ist, die Verdichtungswirkung des Verdichtungsfahrzeugs (28) entlang des Verdichtungsweges (30) ortsabhängig zu variieren, indem die Steuereinrichtung (46) die Verdichtungswirkung des Verdichtungsfahrzeugs (28) abhängig von lokalen Eigenschaften der Silage ortsabhängig kontrolliert, um die Verdichtungswirkung an die lokalen Eigenschaften der Silage anzupassen.

9. Verdichtungsfahrzeug (28) mit einer Steuereinrichtung (46) nach Anspruch 8.
